# EUROPEAN PATENT APPLICATION

(11) **EP 4 819 474 A1**
(43) Date of publication of application: **07.10.2026**
(21) Application number: 25305470.4
(22) Date of filing: 31.03.2025
(51) Int. Cl.: H02M 7/219, H02M 7/23, H02M 1/00, H02J 7/02, H02J 7/04, H02J 7/06, H02M 3/335

(54) **RECONFIGURABLE CONVERTER**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: REGNAT, Guillaume, 35708 RENNES CEDEX 7 (FR); Lefevre, Guillaume, 35708 RENNES CEDEX 7 (FR)
(74) Representative: Plasseraud IP

(57) **Abstract**

A reconfigurable converter (100, 101) has a transformer stage (40) of matrix type, with several controlled rectifier units (51, 52,...) dedicated to separate transformer assemblies (41, 42,...). The reconfigurable converter is configured for inhibiting at least one of the rectifier units in a partial operation mode, so as to vary an effective turn ratio value of said reconfigurable converter. The inhibition can be produced through appropriate control of the rectifier units, without additional controlled switches being necessary. The reconfigurable converter may form a battery charger for transferring electrical power from an AC-grid to a battery set. Transition to the partial operation mode allows using components with lower breakdown limit and meeting thermal constraints for these components.

## Description

The invention relates to a reconfigurable converter and a method for delivering DC-power.

### -- BACKGROUND OF THE INVENTION --

Converters are used for many applications, including DC-DC converters arranged between separate electrical circuits operating are different respective DC-voltage values. AC-DC converters are used in particular for battery charging from the AC-grid, for example for charging the battery set of an electrically powered vehicle.

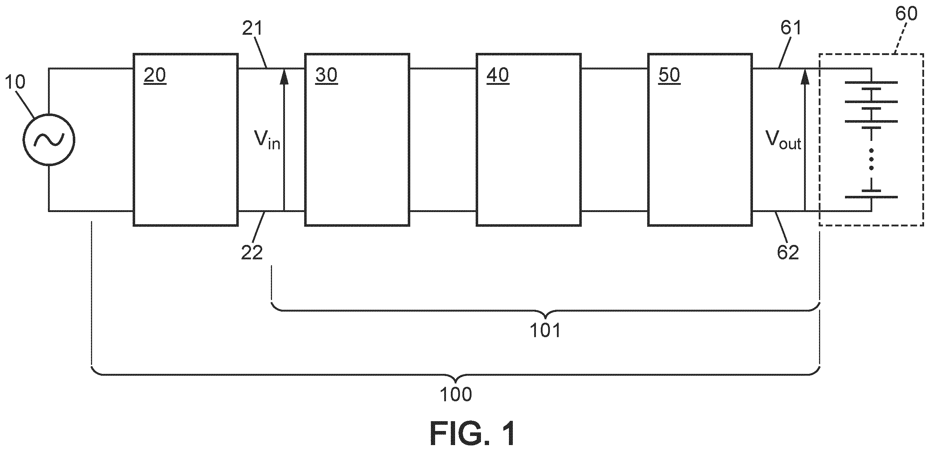

In a known manner, a DC-output converter may include at least a transformer stage, possibly of matrix type, and a rectifier stage which is connected downstream the transformer stage. A transformer-based DC-DC converter additionally includes an inverter stage upstream the transformer stage. An AC-DC converter, for example as used for battery charging from the AC-grid, further includes a power factor converter which is connected upstream such DC-DC converter. The power factor converter allows meeting requirements for suppressing electrical peaks otherwise caused to the AC-grid, and the transformer stage of the DC-DC converter is of isolated type for safety requirements. Figure 1 illustrates such modular arrangement that forms an AC-DC converter 100 suitable for battery charging. The reference numbers in this figure have the following meanings:
- 10: the AC-grid
- 100: the AC-DC converter used as a battery charger
- 101: the transformer-based DC-DC converter
- 20: the power factor converter, formed as an AC-DC converter module
- 21: the positive DC-input bus of the DC-DC converter 101
- 22: the negative DC-input bus of the DC-DC converter 101
- 30: the inverter stage
- 40: the transformer stage
- 50: the rectifier stage
- 60: the battery set to be charged
- 61: the positive DC-output bus
- 62: the negative DC-output bus
The inverter stage 30, the transformer stage 40 and the rectifier stage 50 with the DC-input buses 21, 22 and the DC-output buses 61, 62 form together the DC-DC converter 101. A filtering capacitor (not represented) and a shunt resistor for current measurement (not represented) may be added in a known manner at the DC-output buses 61 and 62 and/or at the DC-input buses 21 and 22. Such capacitors and shunt resistors will no longer be mentioned in the present description but may be used if necessary.

Some applications require that the DC-output voltage of the converter, noted Vₒᵤₜ, can vary. This applies to a converter used for charging a battery set, for example of an electrically powered vehicle where the battery voltage can vary from 400 V (volt) in its initial discharged state to 800 V in its final charged state. It is possible to vary the DC-output voltage Vₒᵤₜ of the converter by adjusting operation parameters such as a frequency value of the inverter and transformer stages, a duty cycle, etc, but so-obtained variations of the DC-output voltage are most often insufficient.

It is also known using multi-winding transformers where the primary and/or secondary winding(s) to be used is (are) selected for providing the desired DC-output voltage value. But such winding selection requires using additional controlled switches for enabling the AC-current to flow only in the selected winding(s). Such additional controlled switches, for example of MOSFET type or other type, participate in increasing the cost price of the converter and cause electrical power losses. They also constitute failure causes which possibly reduce the converter lifetime.

Starting from this situation, one object of the present invention consists in providing a new reconfigurable converter that addresses the above-mentioned issues.

In particular, the invention aims at providing a converter that allows variations of the DC-output voltage without significantly increasing the electrical power losses of the converter, and with reduced converter cost price.

### -- SUMMARY OF THE INVENTION --

For meeting at least one of these objects or others, a first aspect of the present invention proposes a reconfigurable converter that comprises:
- a positive DC-output bus and a negative DC-output bus;
- at least two controlled rectifier units each having two respective AC-input terminals and two respective DC-output terminals, the at least two controlled rectifier units being connected in parallel or in series with one another at their DC-output terminals to the positive DC-output bus and negative DC-output bus;
- for each controlled rectifier unit: one transformer assembly connected at a secondary side thereof to the AC-input terminals of the controlled rectifier unit; and
- a controller configured to control, in a complete operation mode, the at least two controlled rectifier units so as to produce simultaneous rectifying operations of the at least two controlled rectifier units, whereby each controlled rectifier unit participates in supplying electrical current to the positive DC-output bus and negative DC-output bus.

According to the invention, the controller is further configured to, in at least one partial operation mode alternative to the complete operation mode, control at least one of the controlled rectifier units, referred to as inhibited rectifier unit, so as to short-circuit both AC-input terminals of this at least one inhibited rectifier unit. Such connection scheme of each controlled rectifier unit when inhibited results in this inhibited rectifier unit and the corresponding transformer assembly not participating in the current that is supplied to the positive DC-output bus and negative DC-output bus. This current is then supplied only by the non-inhibited rectifier unit(s) and the corresponding transformer assembly(-ies). Transitioning between the complete operation mode and the partial operation mode is equivalent to modifying a turn ratio value that is effective for the converter. In this sense, the converter is reconfigurable. The modification of the effective turn ratio can be produced without adding controlled switches to the converter, thereby avoiding additional electrical power losses, failure causes and cost price increase due to such additional controlled switches.

Generally, each transformer assembly has two primary-side terminals and two secondary-side terminals, and each controlled rectifier unit may be either a full-bridge active rectifier unit or a semi-active rectifier unit.

A full-bridge active rectifier unit has two legs connected in parallel between the positive DC-output bus and negative DC-output bus, each leg comprising in the order from the positive DC-output bus to the negative DC-output bus: an upper controlled switch and a lower controlled switch serially connected through an intermediate point, each of the intermediate points separately forming one of the AC-input terminals of the controlled rectifier unit which are connected to the secondary-side terminals of the corresponding transformer assembly, and a respective bypass diode being effective in parallel with each upper or lower controlled switch and oriented for conducting from the negative DC-output bus toward the positive DC-output bus.

When each controlled rectifier unit that can be inhibited is a full-bridge active rectifier unit, the controller may be configured to set, for each inhibited rectifier unit in the partial operation mode, either both upper controlled switches of this inhibited rectifier unit in conducting state and simultaneously both lower controlled switches of the same inhibited rectifier unit in blocked state, or both upper controlled switches of the inhibited rectifier unit in blocked state and simultaneously both lower controlled switches of the same inhibited rectifier unit in conducting state. In preferred embodiments involving full-bridge active rectifier units, the controller may be further configured to swap conducting and blocked states between the upper and lower controlled switches while maintaining the partial operation mode, preferably swapping each time a current in the AC-input terminals of the inhibited rectifier unit changes in sign. Electrical power losses are thus distributed evenly between the upper and lower controlled switches of each inhibited rectifier unit, thus reducing the time-averaged power losses per controlled switch. A cooling capacity that is individually dedicated to each controlled switch can thus be reduced.

In a first embodiment of a semi-active rectifier unit, it has two legs connected in parallel between the positive DC-output bus and negative DC-output bus, each leg comprising in the order from the positive DC-output bus to the negative DC-output bus: an upper controlled switch and a lower diode serially connected through an intermediate point, each lower diode being conducting from the negative DC-output bus to the corresponding intermediate point, each of the intermediate points separately forming one of the AC-input terminals of the controlled rectifier unit which are connected to the secondary-side terminals of the corresponding transformer assembly, and a respective bypass diode being effective in parallel with each upper controlled switch and oriented for conducting from the negative DC-output bus toward the positive DC-output bus.

When each controlled rectifier unit that can be inhibited is a semi-active rectifier unit according to such first embodiment, the controller may be configured to set, for each inhibited rectifier unit in the partial operation mode, both upper controlled switches of this inhibited rectifier unit in conducting state.

In a second embodiment of a semi-active rectifier unit, it has two legs connected in parallel between the positive DC-output bus and negative DC-output bus, each leg comprising in the order from the positive DC-output bus to the negative DC-output bus: an upper diode and a lower controlled switch serially connected through an intermediate point, each upper diode being conducting from the corresponding intermediate point to the positive DC-output bus, each of the intermediate points separately forming one of the AC-input terminals of the controlled rectifier unit which are connected to the secondary-side terminals of the corresponding transformer assembly, and a respective bypass diode being effective in parallel with each lower controlled switch and oriented for conducting from the negative DC-output bus toward the positive DC-output bus.

When each controlled rectifier unit that can be inhibited is a semi-active rectifier unit according to such second embodiment, the controller may be configured to set, for each inhibited rectifier unit in the partial operation mode, both lower controlled switches of this inhibited rectifier unit in conducting state.

Generally for the invention, any of the following additional features may advantageously be implemented, separately or in combination of several of them:
- each bypass diode which is effective in parallel with one of the upper and lower controlled switches may be either a parasitic diode of this controlled switch or a diode component which is separate from the controlled switch;
- each of the upper and lower controlled switches may be of a MOSFET type, or an IGBT type, IGBT standing for isolated gate bipolar transistor, or a HEMT type, HEMT standing for high electron mobility transistor, in particular a GaN-HEMT type, GaN standing for gallium nitride, or any other type;
- all transformer assemblies of the reconfigurable converter may be serially connected to one another at respective primary sides of these transformer assemblies, thereby forming an ISOP or ISOS configuration of the transformer and rectifier stages, ISOP standing for input-serial output-parallel and ISOS for input-serial output serial;
- each transformer assembly may be comprised of a respective single transformer unit based on one respective magnetic core with one primary winding and one secondary winding. Alternatively, each transformer assembly may comprise a respective parallel or serial or mixed parallel-serial assembly of at least two transformer units based on respective magnetic cores with respective primary and secondary windings;
- each transformer unit may have a flat configuration based on a PCB-technology for forming the primary and secondary windings;
- a number of the controlled rectifier units in the reconfigurable controller may be from 2 to 10; and
- the reconfigurable controller may be of isolated type, i.e. without electrically continuously conducting connections between the primary and secondary windings of each transformer assembly.

Generally, the reconfigurable converter of the invention may further comprise an inverter stage connected to a primary side of the transformer assemblies, so that the reconfigurable converter forms a DC-DC converter. It may be either a step-down DC-DC converter or a step-up DC-DC converter. Possibly, the reconfigurable converter may further comprise a power factor converter connected to an input side of the inverter stage, so that the reconfigurable converter forms an AC-DC converter.

A second aspect of the invention proposes a method for delivering DC-power during a power delivery duration, that comprises using a reconfigurable converter according to the first invention aspect, where the partial operation mode is used during at least part of the power delivery duration.

When the reconfigurable converter further comprises an inverter stage upstream the transformer stage, an input side of this inverter stage may be connected to an AC-grid through a power factor converter. This power factor converter is connected to inverter stage by a positive DC-input bus and a negative DC-input bus. Such configuration may form a charger for batteries, in particular for battery sets of electrically powered automotive vehicles. The power factor converter may be formed by an AC-DC converter module, and may suppress or reduce electrical peaks otherwise sent back into the AC-grid. Then, a transition between the complete operation mode and the partial operation mode or between two partial operation modes may be controlled so that an individual current in each non-inhibited rectifier unit and the corresponding transformer assembly restarts from a same maximum value at each transition, or so that a voltage existing between the positive DC-input bus and the negative DC-input remains below a voltage threshold, in particular below a maximum voltage limit prescribed for at least one component of the power factor converter and the inverter stage, for example a maximum voltage limit prescribed for a controlled switch. This allows using controlled switches in the power factor converter and in the inverter stage that are better performing, in particular with less electrical power losses, and that are less expensive because of having smaller prescribed voltage ranges.

The disclosed method for delivering DC-power may be implemented for one of the following applications:
- charging a battery set of an automotive vehicle from an AC-grid;
- transferring the DC-power from a high-voltage DC-circuit to a low-voltage DC-circuit within an automotive vehicle;
- transferring the DC-power from a high-voltage DC-circuit to a low-voltage DC-circuit within an aircraft; and
- transferring the DC-power from a photovoltaic panel to a DC-current collecting stage.

These and other features of the invention will be now described with reference to the appended figures, which relate to preferred but not-limiting embodiments of the invention.

### -- BRIEF DESCRIPTION OF THE DRAWINGS --

Figure 1 shows a modular structure of an AC-DC converter as known from prior art.
Figure 2 shows a possible configuration of a reconfigurable converter according to the present disclosure.
Figure 3 shows a possible configuration for a transformer assembly to be used in the reconfigurable converter of Figure 2.
Figures 4a and 4b show two sets of controlled states suitable for producing an inhibited state for a full-bridge active rectifier unit of the reconfigurable converter of Figure 2.
Figures 5a and 5b corresponds to Figure 2 when one controlled rectifier unit is inhibited.
Figures 6a and 6b illustrate two variants for a semi-active rectifier unit which can be used in the reconfigurable converter of Figure 2.
Figure 7 corresponds to Figure 2 for another possible configuration of a reconfigurable converter according to the present disclosure.
Figure 8 correspond to Figure 7 when one controlled rectifier unit is inhibited.
Figure 9 is a diagram that illustrates a possible control of a battery charger that incorporates a reconfigurable converter according to the present disclosure.

Same reference numbers which are indicated in different ones of these figures denote identical elements of elements with identical function.

### -- DETAILED DESCRIPTION OF THE INVENTION --

The reconfigurable converter that is now described has the modular structure of the AC-DC converter 100 or DC-DC converter 101 in Figure 1.

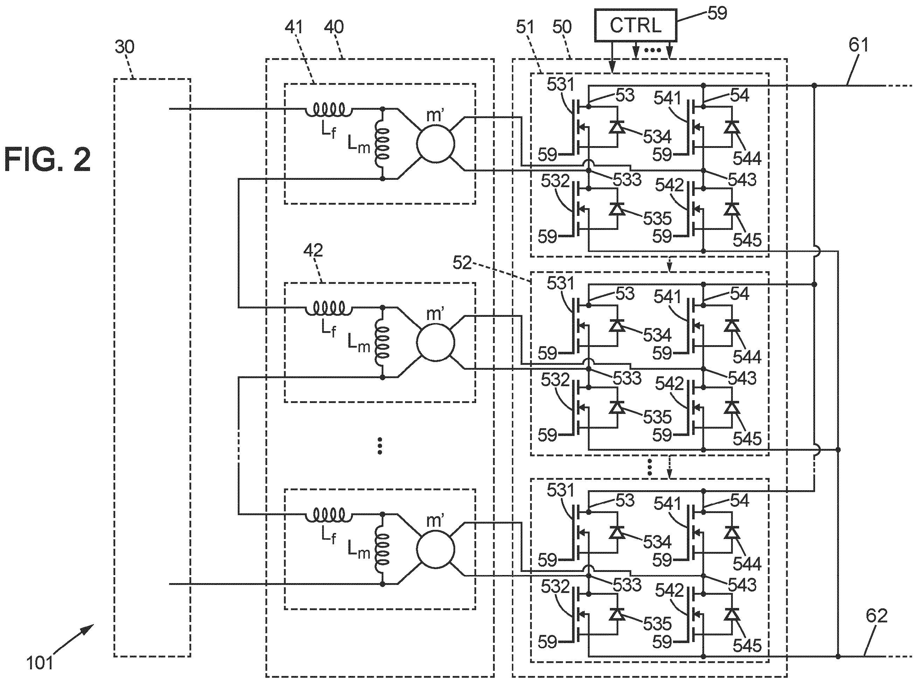

According to Figure 2 which exhibits the DC-DC converter 101, the rectifier stage 50 is formed of several controlled rectifier units 51, 52,... which are connected in parallel with respect to each other to the positive DC-output bus 61 and negative DC-output bus 62. Put another way, the respective positive DC-output terminals of all controlled rectifier units 51, 52,... are connected to the positive DC-output bus 61 and all their respective negative DC-output terminals are connected to the negative DC-output bus 62. Such output configuration is referred to as OP for output-parallel. Each controlled rectifier unit 51, 52,... has an internal arrangement that will be described later below depending on possible variants. Although not represented, a filtering capacitor may be connected between both DC-output buses 61 and 62, in parallel with a load of the DC-DC converter 101.

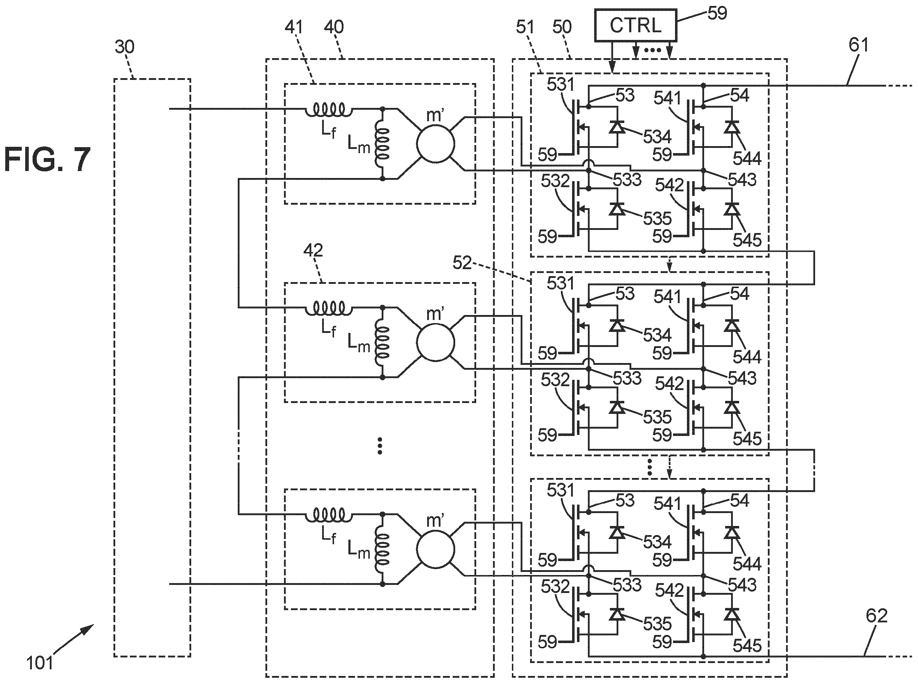

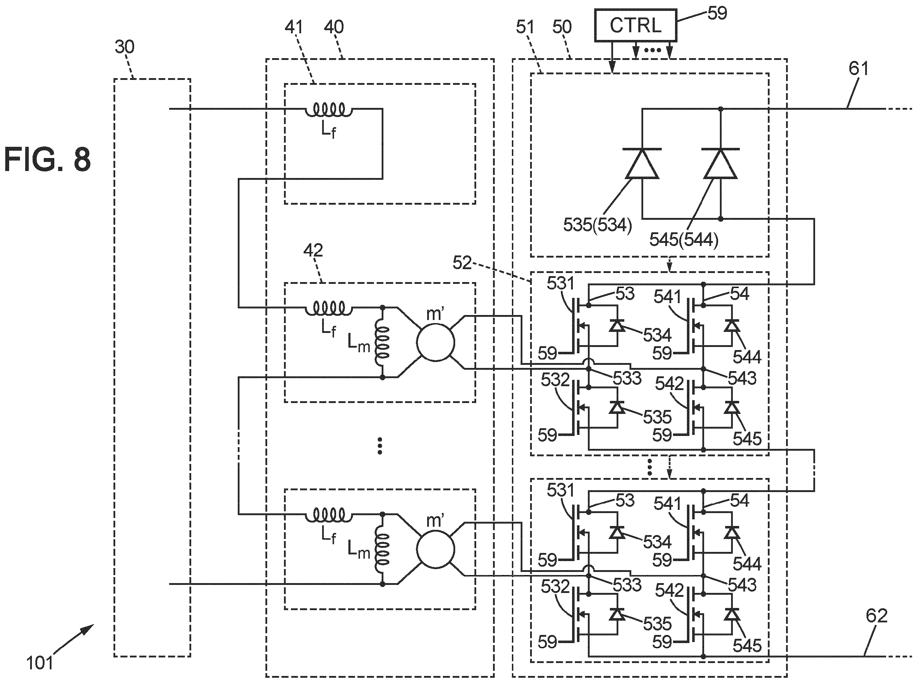

Each of the controlled rectifier units 51, 52,... is connected upstream to a respective transformer assembly 41, 42,..., these transformer assemblies 41, 42 forming together the transformer stage 40 of matrix type. Thus, two secondary-side terminals of the transformer assembly 41 (respectively 42,...) are one-to-one connected to two AC-input terminals of the controlled rectifier unit 51 (resp. 52,...). In the illustrated embodiment, the transformer assemblies 41, 42,... are connected in series to one another at their primary side, corresponding to an IS configuration, standing for input-serial. Hence, the converter 101 has an configuration of ISOP type, or input-serial output-parallel. A possible variant is ISOS configuration, or input-serial output-serial, for the converter 101 where the controlled rectifier units 51, 52,... are connected serially instead of in-parallel at their output side as described below with reference to Figures 7 and 8.

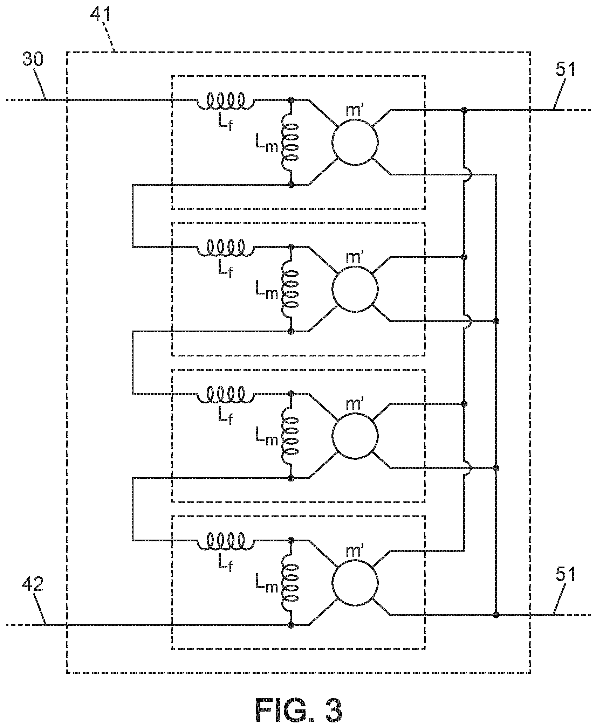

Each transformer assembly 41, 42,... in Figure 2 is comprised of a single transformer unit that includes one magnetic core with one primary winding and one secondary winding. The windings may be formed using a PCB-based technology, as known from prior art and allowing reduced transformer height values. Other available technologies may be used alternatively for each transformer assembly 41, 42,... In Figure 2, each transformer assembly 41, 42,... is represented using its equivalent electrical diagram that involves a leakage inductance L_{f} and a magnetizing inductance Lₘ which are serially connected between the primary-side terminals of the transformer assembly, and a perfect transformer with turn ratio m' equal to Nₛ/Nₚ, where Nₛ is the turn number of the secondary winding and Nₚ that of the primary winding. In alternative embodiments, each transformer assembly 41, 42,... may be comprised of several transformer units which are connected with one another serially at their primary side and serially or in-parallel secondary side. As an example, Figure 3 shows an embodiment of the transformer assembly 41 which comprises four transformer units connected according to ISOP configuration. All transformer assemblies 41, 42,... in the transformer stage 40 may be identical or not, and their number may be any from two.

In Figure 2, each controlled rectifier unit 51, 52,... is of full-bridge active type. It comprises two legs 53 and 54 each connecting the positive DC-output bus 61 to the negative DC-output bus 62. The leg 53 (respectively 54) comprises an upper controlled switch 531 (resp. 541) and a lower controlled switch 532 (resp. 542) which are serially connected, and the intermediate connection point 533 (resp. 543) forms one of both AC-input terminals of the controlled rectifier unit. Each of the controlled switches 531, 532, 541 and 542 may be oriented with its source terminal connected toward the negative DC-output bus 62 in the corresponding leg if the switches are of MOSFET-type. It is in-parallel combined with a respective bypass diode 534, 535, 544, 545 that has reverse conducting direction, i.e. from the negative DC-output bus 62 toward the positive DC-output bus 61. Depending on a technology of each controlled switch, the bypass diode may be a parasitic diode inherent in the controlled switch or a separate component. Available technologies for the controlled switches 531, 532, 541 and 542 may be MOSFET, IGBT, HEMT including GaN-HEMT, etc. For instance, inherent parasitic diodes are sufficient for MOSFET-type switches, and separate bypass diode components are necessary for IGBT-type switches. Such constitution for a controlled rectifier unit is well-known in the art. All controlled rectifier units 51, 52,... in the rectifier stage 50 may be identical.

A controller 59, noted CTRL, simultaneously applies in-time variable control signals to the switches 531, 532, 541 and 542 of all controlled rectifier units 51, 52,... for producing desired operation of the converter 101.

In a complete operation mode of the converter 101, that is known from prior art, all rectifier units 51, 52,... are controlled by the controller 59 so that the upper switch 531 and lower switch 542 are conducting and the lower switch 532 and upper switch 541 are blocked when the electrical potential value of the intermediate point 533 is higher than that of the intermediate point 543, and the conducting and blocking states are swapped when reverse relationship exists between the electrical potential values of the intermediate points 533 and 543. Such control of the rectifier units 51, 52,... in the complete operation mode thus has diagonal configuration.

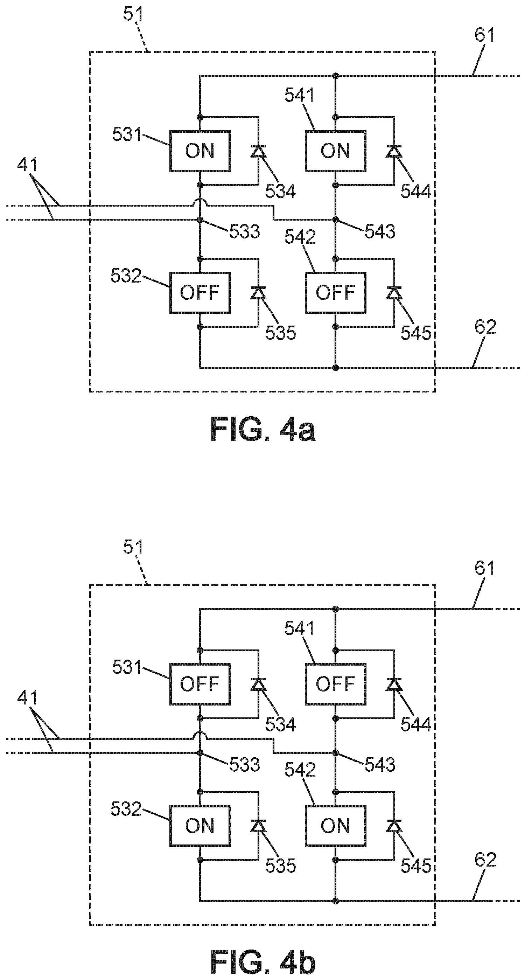

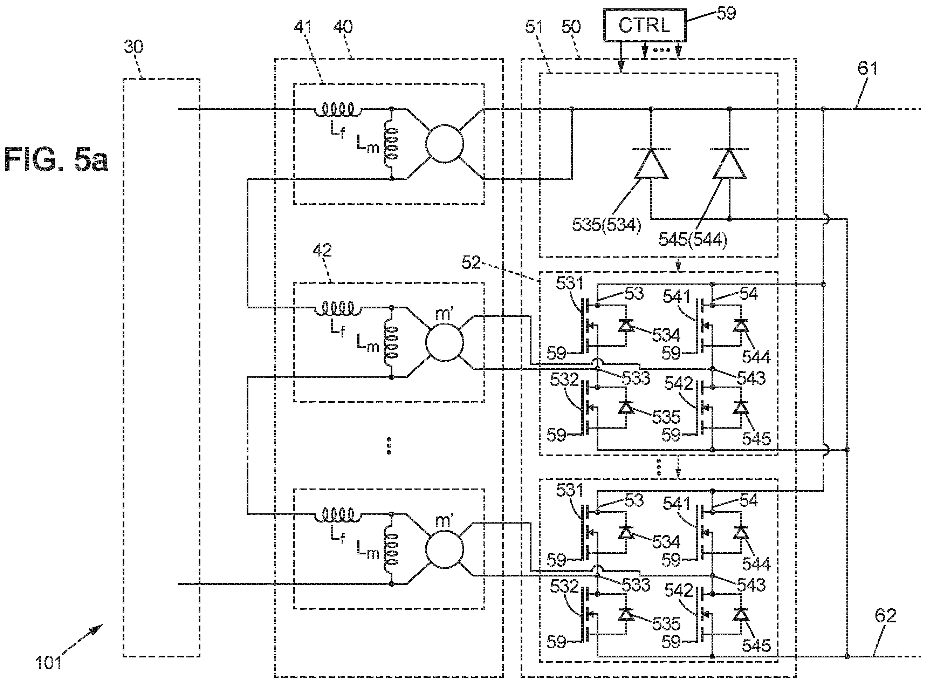

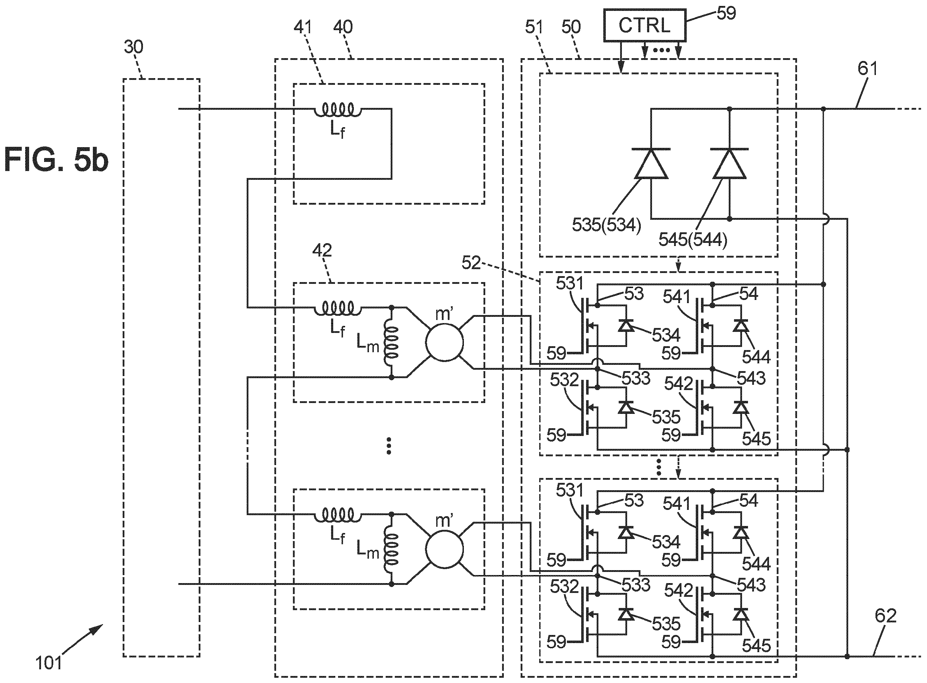

The present disclosure adds at least one alternative operation mode for the converter 101, referred to as partial operation mode, in which at least one of the controlled rectifier units 51, 52,... is inhibited, while at least one another of the controlled rectifier units 51, 52,... remains effective for transmitting DC-current to the DC-output buses 61 and 62. Such alternative operation mode may be controlled again by the controller 59, but using either an upper control configuration or a lower control configuration. Figure 4a illustrates the upper control configuration in which both upper controlled switches 531 and 541 of the inhibited rectifier unit 51 are constantly maintained in conducting state, noted ON, by the controller 59, and both lower controlled switches 532 and 542 are simultaneously and constantly maintained in blocked state, noted OFF, by the controller 59. Figure 4b illustrates the lower control configuration in which both upper controlled switches 531 and 541 of the inhibited rectifier unit 51 are constantly maintained in blocked state OFF by the controller 59, and both lower controlled switches 532 and 542 are simultaneously and constantly maintained in conducting state ON by the controller 59. Both upper and lower control configurations are equivalent to produce inhibition of the controlled rectifier unit 51 and the associated transformer assembly 41. This inhibition results in short-circuiting both AC-input terminals of the controlled rectifier unit 51 and simultaneously having both DC-output terminals connected only through the bypass diode. The inhibited rectifier unit 51 no longer participates in the DC-current that is supplied by the rectifier stage 50 to the DC-output buses 61 and 62. Figure 5a is a first equivalent electric diagram of the same converter 101 as in Figure 2 with the controlled rectifier unit 51 being inhibited. Actually, short-circuit of both AC-input terminals of the inhibited rectifier unit 51 corresponds to short-circuit of both secondary-side terminals of the corresponding transformer unit 41, which is also equivalent to bypass of the magnetizing inductance Lₘ. The equivalent electric diagram of Figure 5b thus applies too. It shows that the inverse of the turn ratio value Nₜᵣ that is effective for the whole converter 101 is reduced by the contribution of the transformer assembly 41 once the controlled rectifier unit 51 is inhibited: Nₜᵣ⁻¹ (with rectifier unit 51 inhibited) = Nₜᵣ⁻¹(with rectifier unit 51 functional) - m'⁻¹ (transformer assembly 41). Simultaneously, the negative DC-output buses 61 and 62 with the ISOP configuration of the converter 101 are connected by the bypass diodes 535 (respectively 534) and 545 (resp. 544) of the inhibited rectifier unit 51 for the upper (resp. lower) control configuration, but these bypass diodes being then in blocked state.

Various partial operation modes respectively correspond to different selections of the controlled rectifier unit(s) that is (are) inhibited. For each partial operation mode, the inversed effective turn ratio Nₜᵣ⁻¹ of the converter 101 is the sum of the inversed individual turn ratios of the transformer assemblies that are associated with non-inhibited rectifier units. Thus, the partial operation modes produce increased turn ratio values effective for the converter 101 compared to its complete operation mode. Generally, the transformer assemblies 41, 42,... may have individual turn ratio values m'=Nₛ/Nₚ which may be identical or different, and different m'-values allows generating partial control modes for the converter 101 with higher number of different values for the effective turn ratio Nₜᵣ.

Because they are equivalent, both upper and lower control configurations may be swapped for each other for a same one of the controlled rectifier units 51, 52,... remaining inhibited. Such swap for the inhibition control configurations may be produced at any time and may be beneficial for distributing electrical power losses between the upper controlled switches and the lower controlled switches of the inhibited rectifier unit. This avoids excessive heating and thermal constraints being produced in the controlled switches that would otherwise remain constantly conducting. However, it may be preferred that the transitions between the both upper and lower control configurations are triggered by the controller 59 to occur when the AC-current entering into the inhibited rectifier unit by its AC-input terminals is zero. Preferably, the controller 59 may control the switches 531, 532, 541 and 542 of each inhibited rectifier unit so that another transition between the upper and lower control configurations occurs each time the current in the AC-input terminals of this inhibited rectifier unit is zero.

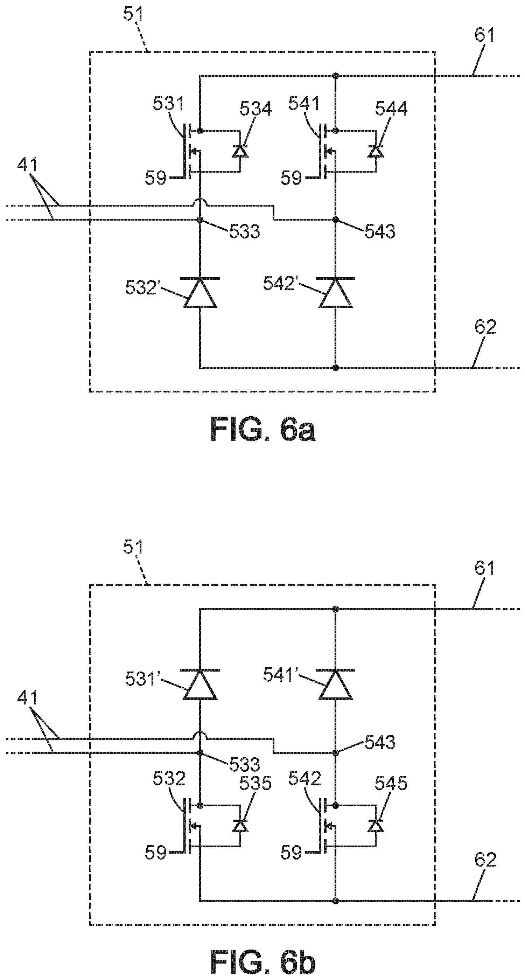

Figure 6a shows a first variant for embodying a controlled rectifier unit intended to be inhibited when desired, for example that with reference number 51. In this first variant, both lower controlled switches 532 and 542 of the full-bridge active type are replaced with respective diodes 532' and 542' each oriented with conducting direction from the negative DC-output bus 62 toward the intermediate point 533/543. The resulting controlled rectifier unit is said semi-active. Inhibition of such semi-active rectifier unit can be produced by the controller 59 by constantly maintaining both upper switches 531 and 541 in conducting state, in a manner similar to the upper control configuration described above.

Figure 6b corresponds to Figure 6a for a second variant. In this second variant, both upper switches 531 and 541 of the full-bridge active type are replaced with respective diodes 531' and 541' each oriented with conducting direction from the intermediate point 533/543 toward the positive DC-output bus 61. The resulting controlled rectifier unit is said semi-active again. Inhibition of such semi-active rectifier unit can be produced by the controller 59 by constantly maintaining both lower switches 532 and 542 in conducting state, in a manner similar to the lower control configuration described above.

Figure 7 corresponds to Figure 2 except the connection configuration of the rectifier units 51, 52,... to the DC-output buses 61 and 62: the rectifier units 51, 52,... are now connected serially by their respective DC-output terminals between the DC-output buses 61 and 62. The converter 101 thus has ISOS configuration, standing for input-serial output-serial. With such ISOS configuration, a common output current flows in the DC-output terminals of all controlled rectifier units 51, 52,...

Figure 8 corresponds to Figure 7 but the controlled rectifier unit 51 being inhibited by the controller 59. Hence, the transformer assembly 41 and the corresponding controlled rectifier unit 51 can be replaced with the equivalent electrical diagram of Figure 5a or 5b. As apparent in Figure 8, the DC-output current that is produced by the non-inhibited rectifier units and the corresponding transformer assemblies, e.g. 42,... and 52,... in Figure 8, can flow through the DC-output terminals of the inhibited rectifier unit 51 thanks to the bypass diodes 535 and 545 in case of the upper control mode or 534 and 544 in the lower control mode.

A possible use of the AC-DC converter 100 of Figure 1 but with the DC-DC converter 101 having ISOP configuration as described with reference to Figures 2 to 6 is now described for charging the battery set 60, from initial voltage value of Vₒᵤₜ₋ₘᵢₙ = 400 V to final voltage value of 800 V. Each transformer assembly 41, 42,... in the transformer stage 40 is of isolated type for safety reason. Within the AC-DC converter 100, the DC-DC converter 101 connects the DC-input buses 21 and 22 to the DC-output buses 61 and 62. DC-voltage between the DC-input busses 21 and 22 is denoted Vᵢₙ, and DC-voltage between the DC-output busses 61 and 62 is denoted Vₒᵤₜ. The DC-DC converter 101 operates in open loop so that it reflects Vₒᵤₜ-variations due to continuing battery-charging into Vᵢₙ-variations. The AC-DC converter that constitutes the power factor converter 20 is adapting to the Vᵢₙ-variations and controls the electrical power that is transferred from the AC-grid 10. This use description is provided as an example for appropriately selecting intermediate Vₒᵤₜ-values to transition from the complete operation mode to a first partial operation mode with one inhibited rectifier unit and thereafter to a second partial operation mode with two inhibited rectifier units. For determining numeral values, all transformer assemblies 41, 42,... in the matrix transformer stage 40 are assumed to be identical with individual turn ratio Nₛ/Nₚ of each transformer assembly equalling five, the connection configuration of the transformer stage 40 and rectifier stage 50 is ISOP as shown in Figure 2, and the number N_{ISOP} of the controlled rectifier units with the associated transformer assemblies equals five. With such conditions, the effective turn ratio Nₜᵣ of the converter equals the individual turn ratio Nₛ/Nₚ of the transformer assemblies divided by the current number of non-inhibited rectifier units. Hence, the following Nₜᵣ-values are obtained as a function of the number x of controlled rectifier units that are simultaneously inhibited: 1 when no inhibited rectifier unit, 5/4 if one inhibited rectifier unit, 5/3 if two inhibited rectifier units, 5/2 if three inhibited rectifier units and 5 if four inhibited control units. Put another way: Nₜᵣ(x) = N_{ISOP}/(N_{ISOP-X}).

Let Pₘₐₓ be the maximum power to be transferred from the AC-grid 10 to the battery set 60, for example Pₘₐₓ = 22 kW (kilowatt). Pₘₐₓ may be prescribed for the battery set 60, or prescribed for the AC-DC converter 100 due to thermal constraints of some components of this latter. Considering that successive operation modes to be implemented for the charge of the battery set 60, corresponding to x=0, 1, 2,... , start each with Vᵢₙ-voltage equalling Vᵢₙ-ₘᵢₙ = 400 V and the maximum power Pₘₐₓ being continually transferred, Vₒᵤₜ-value at this time is Vₒᵤₜ₋ₘᵢₙ = Nₜᵣ(X)·Vᵢₙ₋ₘᵢₙ where x corresponds to the new starting operation mode. Thus, the successive transition thresholds for Vₒᵤₜ-voltage are Vₜᵣₐₙₛ(x) = N_{ISOP}·Vₒᵤₜ₋ₘᵢₙ/(N_{ISOP}-_{X})

Starting with the complete operation mode (x=0) from Vₒᵤₜ = Vₒᵤₜ₋ₘᵢₙ, the current in each transformer assembly and the corresponding rectifier unit is then Iₘₐₓ = Pₘₐₓ/(N_{ISOO}·Vₒᵤₜ₋ₘᵢₙ). The output voltage Vₒᵤₜ increases until reaching the first threshold Vₜᵣₐₙₛ(1) = (N_{ISOP}·Vₒᵤₜ₋ₘᵢₙ)/(N_{ISOP}-1) and the output current simultaneously decreases because of the transferred power being maintained equal to Pₘₐₓ by the power factor converter 20.

Once Vₒᵤₜ-voltage has reached Vₜᵣₐₙₛ(1) in the complete operation mode, one rectifier unit is removed, causing Vᵢₙ-value to drop back to 400 V and the effective value of the turn ratio Nₜᵣ to jump to 5/4. The operation mode is then a first partial operation mode corresponding to x=1. The current that is supplied by each non-inhibited rectifier unit restarts from Iₘₐₓ in this first partial operation mode.

Once Vₒᵤₜ-voltage has reached Vₜᵣₐₙₛ(2) in the first partial operation mode, one second rectifier unit is removed, causing Vᵢₙ-value to drop back again to 400 V and the effective value of the turn ratio Nₜᵣ to jump to 5/3. The current that is supplied by each non-inhibited rectifier unit restarts again from Iₘₐₓ. The operation mode is then a second partial operation mode corresponding to x=2.

A third threshold would be Vₜᵣₐₙₛ(3) = (5-400)/(5-3) = 1000 V. This third threshold is useless since the charge process ends when Vₒᵤₜ reaches 800 V. At the end of the charge, Vᵢₙ-voltage equals 800/(5/3) = 480 V.

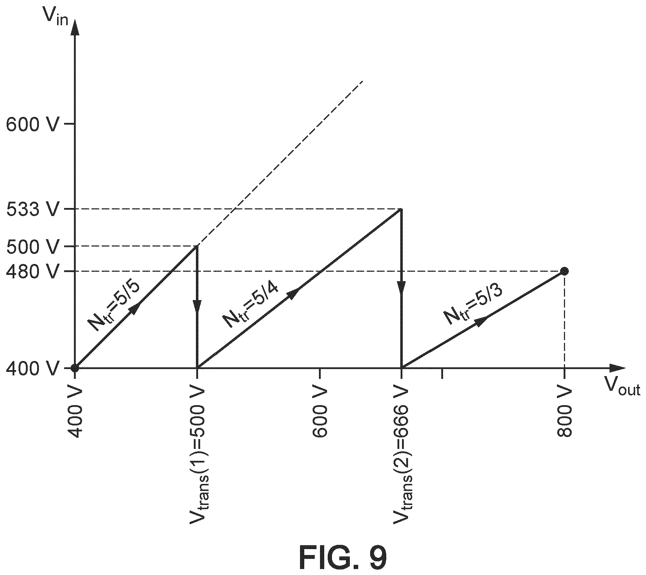

In this process, the converter 101 starts with effective turn ratio value equalling 1.0 and then with increased Nₜᵣ-values, corresponding to a step-up converter. Charging of the battery set 60 is continuously performed with maximum power Pₘₐₓ, and the current in each transformer assembly and the associated controlled rectifier unit is always less than or equal to Iₘₐₓ. The diagram in Figure 9 illustrates this charging process in Vₒᵤₜ- and Vᵢₙ-coordinates. Vₒᵤₜ-values appear on the x-axis and Vᵢₙ-values on the y-axis. The maximum Vᵢₙ-voltage value between the DC-input buses 21 and 22 during the charge process is 533 V, instead of 800 V if the complete operation mode had been continually maintained. Value of 533 V is reached by Vᵢₙ-voltage just before transitioning to the second partial operation mode. Thank to so-limited Vᵢₙ-value, the components of the power factor convertor 20, the inverter stage 30 and the primary side of the transformer stage 40 may have breakdown limit of 650 V instead of 1200 V. Such components with 650 V-breakdown limit are less expensive, and controlled switches with 650 V-breakdown limit are more efficient than controlled switches with 1200 V-breakdown limit.

Other uses for the DC-DC converter 101 may be the following ones:
- for an electrically powered automotive vehicle: the DC-input buses 21 and 22 are connected to a high-voltage DC-circuit, for example with nominal operating voltage of 400 V or 800 V, and the DC-output buses 61 and 62 are connected to a low-voltage DC-circuit, for example with nominal operating voltage of 12 V, the DC-DC converter 101 being then a step-down converter;
- for an aircraft: the DC-input buses 21 and 22 are connected to a high-voltage DC-circuit of 540 V and the DC-output buses 61 and 62 are connected to a low-voltage DC-circuit of 28 V, the DC-DC converter 101 being again a step-down converter; and
- in a photovoltaic plant: transferring DC-power from a photovoltaic panel, for example with nominal voltage value of about 1500 V, to a DC-stage at about 400 V arranged for collecting current from several photovoltaic units.

It is reminded that changes may be made to the embodiments and implementations that have been described above, while maintaining the advantages mentioned. In addition, all numeral values that have been indicated are only for exemplifying purpose and can be changed depending of the application.

## Claims

1. A reconfigurable converter (100, 101) comprising:
- a positive DC-output bus (61) and a negative DC-output bus (62);
- at least two controlled rectifier units (51, 52,...) each having two respective AC-input terminals and two respective DC-output terminals, the at least two controlled rectifier units being connected in parallel or in series with one another at the DC-output terminals to the positive DC-output bus (61) and negative DC-output bus (62);
- for each controlled rectifier unit (51, 52,...): one transformer assembly (41, 42,...) connected at a secondary side of said transformer assembly to the AC-input terminals of the controlled rectifier unit; and
- a controller (59) configured to control, in a complete operation mode, the at least two controlled rectifier units (51, 52,...) so as to produce simultaneous rectifying operations of said at least two controlled rectifier units, whereby each controlled rectifier unit participates in supplying electrical current to the positive DC-output (61) bus and negative DC-output bus (62);
**characterized in that** the controller (59) is further configured to, in at least one partial operation mode alternative to the complete operation mode, control at least one of the controlled rectifier units (51, 52,...), referred to as inhibited rectifier unit, so as to short-circuit both AC-input terminals of the at least one inhibited rectifier unit.

2. The reconfigurable converter (100, 101) of claim 1, wherein
each transformer assembly (41, 42,...) has two primary-side terminals and two secondary-side terminals,
each controlled rectifier unit (51, 52,...) that can be inhibited is a full-bridge active rectifier unit having two legs (53, 54) connected in parallel between the positive DC-output bus (61) and negative DC-output bus (62), each leg comprising in the order from the positive DC-output bus to the negative DC-output bus: an upper controlled switch (531, 541) and a lower controlled switch (532, 542) serially connected through an intermediate point (533, 543), each of the intermediate points separately forming one of the AC-input terminals of said controlled rectifier unit which are connected to the secondary-side terminals of the corresponding transformer assembly (41, 42,...), and a respective bypass diode (534, 535, 544, 545) being effective in parallel with each upper or lower controlled switch and oriented for conducting from the negative DC-output bus toward the positive DC-output bus,
and wherein the controller (59) is configured to set, for each inhibited rectifier unit in the partial operation mode, either both upper controlled switches (531, 541) of said inhibited rectifier unit in conducting state and simultaneously both lower controlled switches (532, 542) of the same inhibited rectifier unit in blocked state, or both upper controlled switches of the inhibited rectifier unit in blocked state and simultaneously both lower controlled switches of the same inhibited rectifier unit in conducting state.

3. The reconfigurable converter (100, 101) of claim 2, wherein the controller (59) is further configured to swap conducting and blocked states between the upper (531, 541) and lower (532, 542) controlled switches while maintaining the partial operation mode, preferably swapping each time a current in the AC-input terminals of said inhibited rectifier unit changes in sign.

4. The reconfigurable converter (100, 101) of claim 1, wherein
each transformer assembly (41, 42,...) has two primary-side terminals and two secondary-side terminals,
each controlled rectifier unit (51, 52,...) that can be inhibited is a semi-active rectifier unit having two legs (53, 54) connected in parallel between the positive DC-output bus (61) and negative DC-output bus (62), each leg comprising in the order from the positive DC-output bus to the negative DC-output bus: an upper controlled switch (531, 541) and a lower diode (532', 542') serially connected through an intermediate point (533, 543), each lower diode being conducting from the negative DC-output bus to the corresponding intermediate point, each of the intermediate points separately forming one of the AC-input terminals of said controlled rectifier unit which are connected to the secondary-side terminals of the corresponding transformer assembly (41, 42,...), and a respective bypass diode (534, 544) being effective in parallel with each upper controlled switch and oriented for conducting from the negative DC-output bus toward the positive DC-output bus,
and wherein the controller (59) is configured to set, for each inhibited rectifier unit in the partial operation mode, both upper controlled switches (531, 541) of said inhibited rectifier unit in conducting state.

5. The reconfigurable converter (100, 101) of claim 1, wherein
each transformer assembly (41, 42,...) has two primary-side terminals and two secondary-side terminals,
each controlled rectifier unit (51, 52,...) that can be inhibited is a semi-active rectifier unit having two legs (53, 54) connected in parallel between the positive DC-output bus (61) and negative DC-output bus (62), each leg comprising in the order from the positive DC-output bus to the negative DC-output bus: an upper diode (531', 541') and a lower controlled switch (532, 542) serially connected through an intermediate point (533, 543), each upper diode being conducting from the corresponding intermediate point to the positive DC-output bus, each of the intermediate points separately forming one of the AC-input terminals of said controlled rectifier unit which are connected to the secondary-side terminals of the corresponding transformer assembly (41, 42,...), and a respective bypass diode (535, 545) being effective in parallel with each lower controlled switch and oriented for conducting from the negative DC-output bus toward the positive DC-output bus,
and wherein the controller (59) is configured to set, for each inhibited rectifier unit in the partial operation mode, both lower controlled switches (532, 542) of said inhibited rectifier unit in conducting state.

6. The reconfigurable converter (100, 101) of one of claims 2 to 5, wherein each of the upper (531, 541) and lower (532, 542) controlled switches is of a MOSFET type, or an IGBT type, or a HEMT type, in particular a GaN-HEMT type.

7. The reconfigurable converter (100, 101) of one of claims 1 to 6, wherein all transformer assemblies (41, 42,...) of said reconfigurable converter are serially connected to one another at respective primary sides of said transformer assemblies.

8. The reconfigurable converter (100, 101) of one of claims 1 to 7, wherein each transformer assembly (41, 42,...) is comprised of a respective single transformer unit based on one respective magnetic core with one primary winding and one secondary winding, or comprises a respective parallel or serial or mixed parallel-serial assembly of at least two transformer units based on respective magnetic cores with respective primary and secondary windings.

9. The reconfigurable converter (100, 101) of claim 8, wherein each transformer unit (41, 42,...) has a flat configuration based on a PCB-technology for forming the primary and secondary windings.

10. The reconfigurable converter (100, 101) of one of claims 1 to 9, wherein a number of the controlled rectifier units (51, 52,...) is from 2 to 10.

11. The reconfigurable converter (100, 101) of one of claims 1 to 10, of isolated type.

12. The reconfigurable converter (100, 101) of one of claims 1 to 11, further comprising an inverter stage (30) connected to a primary side of the transformer assemblies (41, 42,...), so that the reconfigurable converter forms a DC-DC converter.

13. A method for delivering DC-power during a power delivery duration, comprising using a reconfigurable converter (100, 101) according to one of claims 1 to 12, wherein the partial operation mode is used during at least part of the power delivery duration.

14. The method of claim 13, wherein the reconfigurable converter (100, 101) is in accordance with claim 12, and an input side of the inverter stage (30) is connected to an AC-grid through a power factor converter (20), the power factor converter being connected to inverter stage by a positive DC-input bus (21) and a negative DC-input bus (22),
and wherein a transition between the complete operation mode and the partial operation mode or between two partial operation modes is controlled so that an individual current in each non-inhibited rectifier unit and the corresponding transformer assembly restarts from a same maximum value at each transition, or so that a voltage existing between the positive DC-input bus (21) and the negative DC-input bus (22) remains below a voltage threshold, in particular below a maximum voltage limit prescribed for at least one component of the power factor converter (20) and the inverter stage (30), for example a maximum voltage limit prescribed for a controlled switch.

15. The method of claim 13 or 14, implemented for one of the following applications:
- charging a battery set of an automotive vehicle from an AC-grid;
- transferring the DC-power from a high-voltage DC-circuit to a low-voltage DC-circuit within an automotive vehicle;
- transferring the DC-power from a high-voltage DC-circuit to a low-voltage DC-circuit within an aircraft; and
- transferring the DC-power from a photovoltaic panel to a DC-current collecting stage.
